# EUROPEAN PATENT SPECIFICATION

(11) **EP 2 012 019 B1**
(45) Date of publication and mention of the grant of the patent: **25.10.2017**
(21) Application number: 08011939.9
(22) Date of filing: 02.07.2008
(51) Int. Cl.: F04D 29/058, F04D 29/057, F04D 29/051, F16C 32/04, F16C 17/02

(54) **Bearing apparatus and centrifugal compressor provided with same**
Lagervorrichtung und Radialverdichter damit
Ensemble de pallier et compresseur centrifuge fourni avec celui-ci

(30) Priority: 03.07.2007 JP 2007175531
(43) Date of publication of application: 07.01.2009
(73) Proprietor: JTEKT Corporation, Osaka-shi Osaka 542-8502 (JP)
(72) Inventor: Miyagawa, Yasukata, Osaka-shi Osaka 542-8502 (JP); Ueyama, Hirochika, Hirakata-shi Osaka 573-1143 (JP); Taniguchi, Manabu, Kashihara-shi Nara 634-0812 (JP)
(74) Representative: Hoefer & Partner Patentanwälte mbB

(56) References cited:
- US-A- 5 857 348
- US-A- 6 118 199
- US-A1- 2004 005 228

## Description

### BACKGROUND OF THE INVENTION

### 1. Field of the Invention

This invention relates to a bearing apparatus designed to suppress wear of a foil bearing, and also relates to a centrifugal compressor provided with this bearing apparatus.

### 2. Related Art

Generally, it is known to use a bearing apparatus for rotatably supporting a rotating member in a rotating machine such for example as a compressor and a blower. A rolling bearing, a slide bearing or the like can be used as a bearing employed in the bearing apparatus. However, in order to suppress contact of the rotating member with the bearing so as to prolong a life of the bearing apparatus, generally, a magnetic bearing or a foil bearing which is a non-contact bearing (that is, a bearing for supporting the rotating member in a non-contact manner) has been used. Furthermore, US 5857348 A discloses a bearing apparatus according to the preamble part of claim 1.

As one example of bearing apparatuses employing a foil bearing (non-contact bearing), there is known one in which the foil bearing is used as a bearing for supporting a rotating member in a radial direction (that is, in a direction perpendicular to a rotation axis of the rotating member). This foil bearing is opposed to the rotating member in the radial direction, and when the rotating member is rotated, a dynamic pressure is produced in a clearance between those portions of the rotating member and foil bearing opposed to each other in the radial direction. The rotating member is caused to float off the foil bearing by a gas lubrication operation due to this dynamic pressure, so that a space is formed between the rotating member and the foil bearing, and the rotating member is rotated in non-contacting relation to the foil bearing.

Here, in a condition in which a sufficient dynamic pressure to cause the rotating member to float off the foil bearing is not obtained as at the time of starting the rotation, the rotating member rotates in contact with the foil bearing. Therefore, there has been encountered a problem that the foil bearing is worn.

Therefore, in order to suppress wear of the foil bearing, it is known to supply a jet of compressed air to the clearance between the rotating member and the foil bearing at the time of starting the rotation. More specifically, for example, a through hole for supplying a jet of compressed air is formed in the foil bearing, etc., and a jet of compressed air is supplied through this through hole into the clearance between the rotating member and the boil bearing at the time of starting the rotation, thereby increasing the internal pressure within the foil bearing so as to suppress wear of the foil bearing (see, for example, JP-A-2004-197606).

However, in the above conventional technique, a jet of compressed air is supplied at the time of starting the rotation, and therefore the through hole must be formed in the foil bearing, etc., and in addition to the rotating member and the foil bearing, means for supplying a jet of compressed air must be provided, and therefore there has been encountered a problem that the construction of suppressing wear of the foil bearing becomes complicated.

### SUMMARY OF THE INVENTION

This invention has been made in view of the above circumstances, and an object of the invention is to provide a bearing apparatus in which in a condition in which a sufficient dynamic pressure to cause a rotating member to float off a foil bearing is not obtained, wear of the foil bearing can be suppressed with a simple construction. Another object of the invention is to provide a centrifugal compressor provided with such a bearing apparatus.

The above object has been achieved by a bearing apparatus of the invention comprising: a rotating member having a magnetic member;
a foil bearing for supporting said rotating member in a radial direction;
a magnetic bearing for supporting said rotating member in an axial direction by an electromagnet; and
a controller for controlling electric current supplied to said electromagnet; and
the electric current is supplied to said electromagnet to produce a magnetic attraction force which attracts said magnetic member so as to cause said rotating member to float off said foil bearing; and
said controller controls such that a first electric current is supplied to said electromagnet so as to cause said electromagnet to attract said magnetic member so as to support said rotating member in the axial direction, and
said controller also controls such that a second electric current larger than said first electric current is supplied to said electromagnet when a number of revolutions of said rotating member is smaller than a number of revolutions at which said rotating member floats off said foil bearing after said first electric current is supplied to said electromagnet.

In this construction, under the control of the controller, the first electric current is supplied to the electromagnet so as to support the rotating member in the axial direction, and also when the number of revolutions of the rotating member is smaller than the number of revolutions at which the rotating member floats off the foil bearing when supplying the first electric current to the electromagnet, the second electric current larger than the first electric current is supplied to the electromagnet. Therefore, when the number of revolutions of the rotating member is smaller than the number of revolutions at which the rotating member floats off the foil bearing when supplying the first electric current to the electromagnet, the second electric current is supplied to the electromagnet, so that the magnetic member is attracted by a larger force than when the first electric current is supplied to the electromagnet, and therefore the rotating member can be caused to float off the foil bearing. Therefore, in a condition in which a sufficient dynamic pressure to cause the rotating member to float off the foil bearing is not obtained as at the time of starting the rotation, the rotating member can be caused to float off the foil bearing at the smaller number of revolutions, and with the simple construction in which merely the electric current supplied to the electromagnet is controlled, wear of the foil bearing can be suppressed. As a result, the life of the foil bearing can be prolonged. Incidentally, the radial direction is the direction perpendicular to the rotation axis of the rotating member, and the axial direction is the direction parallel to the rotation axis of the rotating member. The term "large electric current" means an electric current whose current value representing a quantity of electric current is large. The term "the number of revolutions" means the number of revolutions per unit time.

In the invention, the magnetic bearing may include a yoke member receiving the electromagnet; and the electromagnet and the yoke member may be opposed to the magnetic member in the axial direction; first and second projections may be formed respectively on the magnetic member and the yoke member, and opposed to each other when the rotating member is disposed in a floating condition relative to the foil bearing, and the projections may be annular, and may have their centers disposed on a rotation axis of the rotating member.

In this construction, the electromagnet and the yoke member are opposed to the magnetic member in the axial direction, and the first and second projections are formed respectively on the magnetic member and the yoke member, and are opposed to each other when the rotating member is disposed in the floating condition relative to the foil bearing, and the projections are annular, and have their centers disposed on the rotation axis of the rotating member. Therefore, when electric current is supplied to the electromagnet, the rotating member is attracted by a magnetic attraction force such that its rotation axis is located at a position where the rotation axis of the rotating member in its floating condition relative to the foil bearing is located, and therefore the rotating member can be effectively caused to float off the foil bearing. Therefore, wear of the foil bearing can be effectively suppressed.

Further, in the invention, a plurality of the first projections may be formed on the magnetic member, and a plurality of the second projections may be formed on the yoke member, and the plurality of first projections, as well as the plurality of second projections, may be annular and concentric, and may have their centers disposed on the rotation axis of the rotating member.

In this construction, the plurality of projections are annular and concentric, and have their centers disposed on the rotation axis of the rotating member. Therefore, by a larger magnetic attraction force produced when electric current is supplied to the electromagnet, the rotating member is attracted such that its rotation axis is located at the position where the rotation axis of the rotating member in its floating condition relative to the foil bearing is located, and therefore the rotating member can be more effectively caused to float off the foil bearing. Therefore, wear of the foil bearing can be more effectively suppressed.

Furthermore, in the invention, the apparatus may further comprise a detector for detecting the number of revolutions of the rotating member.

In this construction, there is provided the detector for detecting the number of revolutions of the rotating member. Therefore, on the basis of the revolution number of the rotating member detected by the detector, the controller can accurately switch the operating electric current supplied to the electromagnet between the first electric current and the second electric current. Therefore, the electric current supplied to the electromagnet can be accurately controlled, and wear of the foil bearing can be precisely suppressed.

In the invention, after the rotating member floats off the foil bearing, the controller may switch the operating electric current from the second electric current to the first electric current in a manner to maintain the floating condition of the rotating member.

In this construction, after the rotating member floats off the foil bearing, the controller switches the operating electric current from the second electric current to the first electric current in a manner to maintain the floating condition of the rotating member. Therefore, when the operating electric current is switched from the second electric current to the first electric current, the rotating member will not be brought into contact with the foil bearing, and therefore wear of the foil bearing developing at this time can be prevented.

In the invention, a centrifugal compressor may comprise the bearing apparatus as defined in the invention.

In this construction, the centrifugal compressor comprises the bearing apparatus of the invention, and therefore the same advantages as described above for the bearing apparatus can be obtained.

In the present invention, in a condition in which a sufficient dynamic pressure to cause the rotating member to float off the foil bearing is not obtained, wear of the foil bearing can be suppressed with the simple construction, thereby prolonging the life of the foil bearing.

### BRIEF DESCRIPTION OF THE DRAWINGS

Fig. 1 is a schematic view showing a centrifugal compressor provided with a preferred embodiment of a bearing apparatus of the present invention.
Fig. 2 is a block diagram showing the bearing apparatus of the above embodiment.
Fig. 3 is a graph explanatory of the relation between the number of revolutions of a rotor and the amount of floating of the rotor off a foil bearing which relation is obtained when a first electric current is supplied to an electromagnet.
Fig. 4 is a graph explanatory of the relation between the number of revolutions of the rotor and the amount of floating of the rotor off the foil bearing which relation is obtained when a second electric current is supplied to the electromagnet.

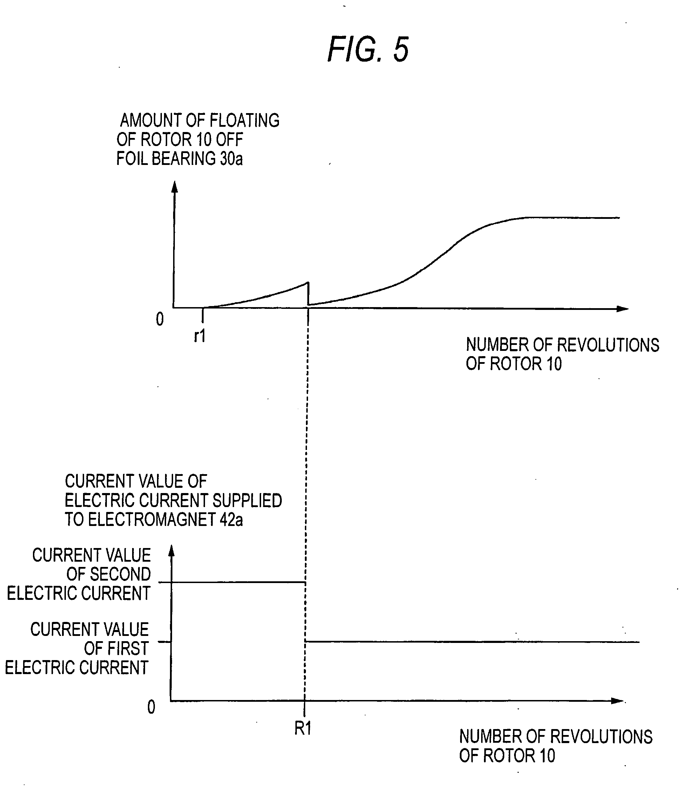

Fig. 5 is a graph explanatory of the operation of the bearing apparatus of the invention.
Fig. 6 is a graph explanatory of the operation of the bearing apparatus of the invention.

### DETAILED DESCRIPTION OF THE PREFERRED EMBODIMENTS

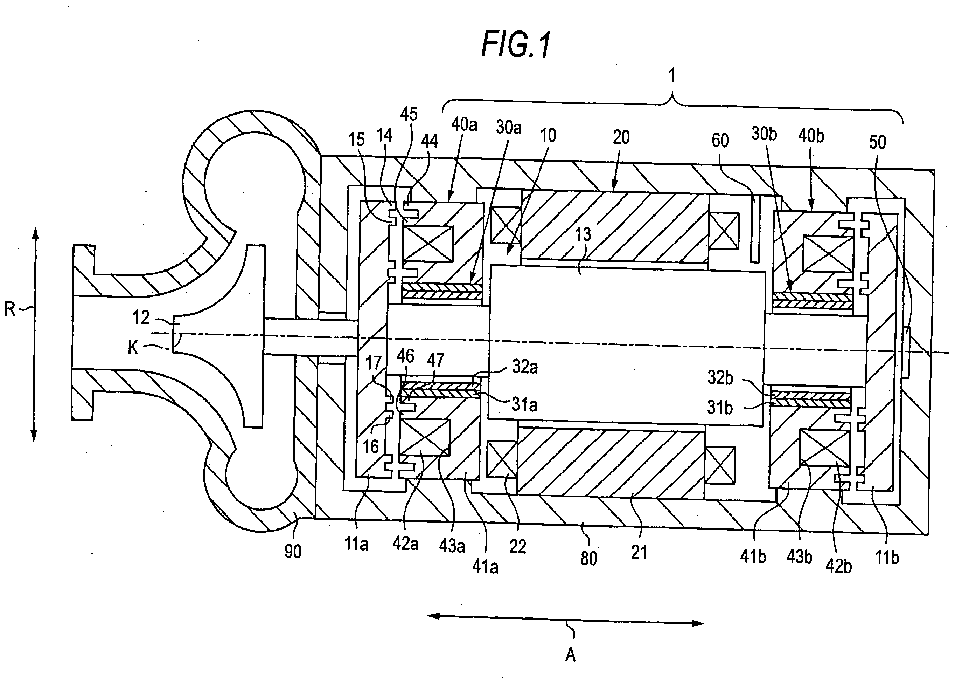

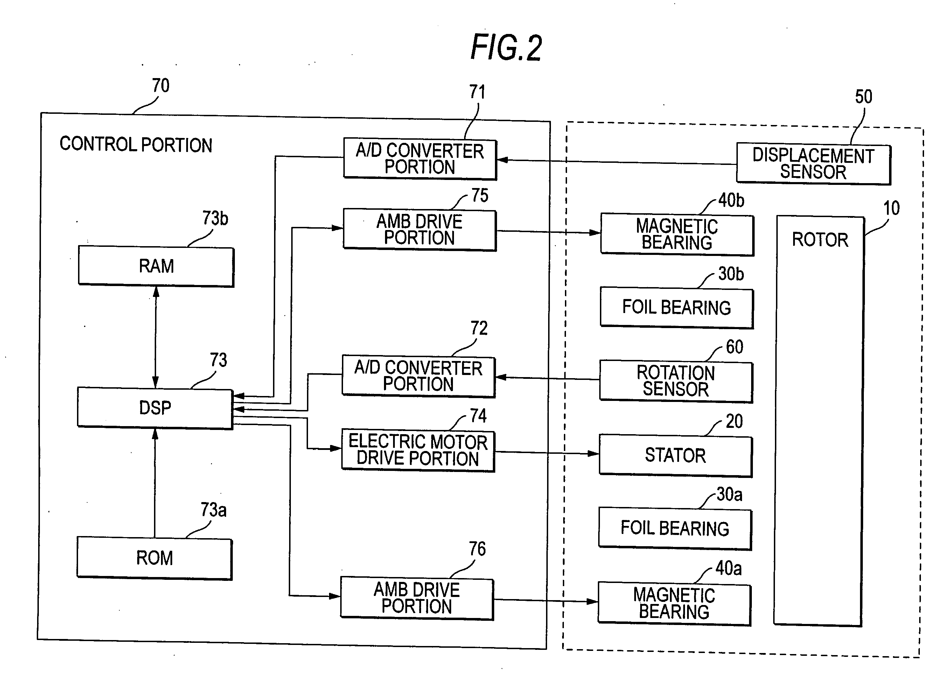

One preferred embodiment of a bearing apparatus of the present invention will now be described with reference to the drawings. Fig. 1 is a schematic view showing an overall construction of a centrifugal compressor provided with the bearing apparatus of the invention. As shown in Fig. 1, the bearing apparatus 1 comprises a rotor (rotating member) 10, a stator 20 for producing a rotating magnetic field for rotating the rotor 10, and foil bearings 30a and 30b and magnetic bearings 4Oa and 40b which rotatably support the rotor 10. An electric motor is formed by the rotor 10 and the stator 20. The bearing apparatus 1 further comprises a displacement sensor 50 for detecting the position of the rotor 10 in an axial direction (which is parallel to a rotation axis K of the rotor 10, and is indicated by arrow A in Fig. 1), and a rotation sensor (detector) 60 for detecting the number of revolutions of the rotor 10 per unit time (hereinafter referred to merely as "the number of revolutions"). The bearing apparatus 1 further comprises a control portion (controller) 70 (see Fig. 2) for controlling a magnetic attraction force of the magnetic bearings 40a and 40b and the rotation of the roller 10 on the basis of the position of the rotor 10 detected by the displacement sensor 50 and the number of revolutions of the rotor 10 detected by the rotation sensor 60.

As shown in Fig. 1, the rotor 10 includes a pair of disk-like flange portions 11a and 11b, an impeller 12 formed at its one end portion in the axial direction A, and a larger-diameter portion 13 opposed to the stator 20 in a radial direction (which is perpendicular to the rotation axis K of the rotor 10, and is indicated by arrow R in Fig. 1). The pair of flange portions 11a and 11b are disposed such that the larger-diameter portion 13 is interposed therebetween in the axial direction A. In this embodiment, the whole of each of the flange portions 11a and 11b is made of a magnetic material. Incidentally, part of each flange portion 11a, 11b may be made of a magnetic material, and for example that portion of the flange portion 11a facing the magnetic bearing 40a may be made of a magnetic material, and similarly that portion of the flange portion 11b facing the magnetic bearing 40b may be made of a magnetic material. Permanent magnets (not shown) are embedded in that portion of the larger-diameter portion 13 opposed to the stator 20 in such a manner that magnetic poles of opposite signs are alternately arranged in the direction of rotation of the rotor 10.

As shown in Fig. 1, the stator 20 comprises a stator core 21, and a coil 22 consisting of a conductor wound on the stator core 21. When electric current is flowed through this coil 22, a rotating magnetic field is generated, so that the larger-diameter portion 13 having the permanent magnets embedded therein is rotated. Therefore, the impeller 12 formed on the rotor 10 is rotated in accordance with the rotation of the larger-diameter portion 13 of the rotor 10, and therefore gas (air) is fed in a centrifugal direction (that is, in a direction perpendicular to the axial direction A).

As shown in Fig. 1, the foil bearings 30a and 30b are disposed such that the stator 20 is interposed therebetween in the axial direction A. The foil bearings 30a and 30b are opposed to the rotor 10 in the radial direction R, and supports the rotor 10 in the radial direction R. Each of the foil bearings 30a and 30b comprises an annular bump foil 31a, 31b of a wavy shape, and a sleeve-like top foil 32a, 32b disposed within the bump foil 31a, 31b.

The magnetic bearings 40a and 40b are disposed such that the stator 20 is interposed therebetween in the axial direction A. The magnetic bearing 40a is opposed to the flange portion (magnetic member) 11a in the axial direction A, while the magnetic bearing 40b is opposed to the flange portion (magnetic member) 11b in the axial direction A. The rotor 10 is supported in the axial direction by these magnetic bearings 40a and 40b. Each of the magnetic bearings 40a and 40b comprises an annular yoke member 41a, 41b having an annular channel-shaped groove 43a, 43b formed therein, and an electromagnet 42a, 42b received in the groove 43a, 43b. The magnetic bearings 40a and 40b of this construction attract the respective flange portions (magnetic members) 11a and 11b by magnetic attraction forces produced when supplying electric current to the electromagnets 42a and 42b, and support the rotor 10 in a non-contact condition. In order to reduce the size of the bearing apparatus 1 in the axial direction A, the foil bearings 30a and 30b are provided respectively within the annular yoke members 41a and 41b (that is, within the magnetic bearings 40a and 40b), and the yoke members 41a and 41b also serve respectively as housings for the foil bearings 30a and 30b.

The electromagnets 42a and 42b of the magnetic bearings 40a and 40b are so disposed as to be opposed respectively to the flange portions (magnetic members) 11a and 11b when the rotor 10 floats off the foil bearings 30a and 30b as shown in Fig. 1. Therefore, in the bearing apparatus 1, by supplying electric current to the electromagnets 42a and 42b, there can be produced magnetic attraction forces which attract the flange portions (magnetic members) 11a and 11b to thereby cause the rotor 10, disposed in contact with the foil bearings 30a and 30b, to float off the foil bearings 30a and 30b.

The displacement sensor 50 is opposed to the end of the rotor 10 in the axial direction A, and outputs to the control portion 70 an analog signal representative of the position of the rotor 10 in the axial direction A.

The rotation sensor 60 is opposed to the larger-diameter portion 13 in the radial direction R, and detects a change of a magnetic field due to the rotation of the permanent magnets embedded in the larger-diameter portion 13 in order to detect the number of revolutions of the rotor 10. The rotation sensor 60 outputs to the control portion 70 an analog signal representative of the number of revolutions of the rotor 10.

As shown in a block diagram of Fig. 2, the control portion 70 includes an A/D converter portion 71 for converting the analog signal, representing the position of the rotor 10 and fed from the displacement sensor 50, into a digital signal, and an A/D converter portion 72 for converting the analog signal, representing the number of revolutions of the rotor 10 and fed from the rotation sensor 60, into a digital signal. The control portion 70 further includes a DSP (Digital Signal Processor) 73 which form control signals by executing a control program on the basis of the digital signals outputted from the A/D converter portions 71 and 72 and other external digital signals. Incidentally, the control program to be executed by the DSP 73 is stored in a ROM 73a, and this control program is executed using a RAM (scratchpad memory) 73b. Also, information relating to the number of revolutions of the rotor 10 (which enables the rotor 10 to float off the foil bearings 30a and 30b) and other information are stored in the ROM 73a which is memory means.

The control portion 70 further includes an electric motor drive portion 74 for controlling electric current to be flowed through the coil 22 of the stator 20 on the basis of the control signal formed by the DSP 73, so as to control the number of revolutions of the rotor 10. The control portion 70 further includes AMB (Active Magnetic Bearing) drive portions 75 and 76 for controlling electric currents supplied respectively to the electromagnets 42a and 42b on the basis of the control signal formed by the DSP 73, so as to control the magnetic attraction forces of the magnetic bearings 40a and 40b. Therefore, on the basis of the position of the rotor 10 detected by the displacement sensor 50 and the number of revolutions of the rotor 10 detected by the rotation sensor 60, the control portion 70 controls electric current to be flowed through the coil 22 of the stator 20 and electric currents supplied respectively to the electromagnets 42a and 42b.

As shown in Fig. 1, the centrifugal compressor includes a casing 80 protecting the bearing apparatus 1, and a volute 90 forming a passage for gas fed in the centrifugal direction by the impeller 12. The constituent elements (that is, the stator 20, the foil bearings 30a and 30b, the magnetic bearings 40a and 40b, the displacement sensor 50 and the rotation sensor 60) of the bearing apparatus except the rotor 10 and the control portion 70, as well as the volute 90, are fixed to the casing 80. Gas fed by the impeller 12 is fed under pressure to a discharge port (not shown) through the volute 90.

Next, the operation of the bearing apparatus 1 of the above construction employed in the centrifugal compressor will be described.

When the rotor 10 rotates at a predetermined rotational speed (i.e., a predetermined number of revolutions), a dynamic pressure is produced in a clearance between those portions of the rotor 10 and each foil bearing 30a, 30b opposed to each other in the radial direction R. The rotor 10 is caused to float off the foil bearings 30a and 30b by a gas lubrication operation due to this dynamic pressure, and the rotor 10 is rotated in non-contacting relation to the foil bearings 30a and 30b as shown in Fig. 1.

Here, in this embodiment, the control portion 70 controls such that a first electric current is supplied to the electromagnet 42a so as to cause the electromagnet 42a to attract the flange portion (magnetic member) 11a so as to support the rotor 10, floating off the foil bearing 30a, in the axial direction A. The control portion 70 also controls such that when the number of revolutions of the rotor 10 is smaller than the number of revolutions at which the rotor 10 floats off the foil bearing 30a when supplying the first electric current to the electromagnet 42a, a second electric current larger than the first current is supplied to the electromagnet 42a (This is one feature of the invention). Here, the term "large electric current" means an electric current whose current value representing a quantity of electric current is large. Namely, the term "the second electric current larger than the first electric current" means the second electric current larger in current value than the first electric current. The term "the number of revolutions" means the number of revolutions per unit time.

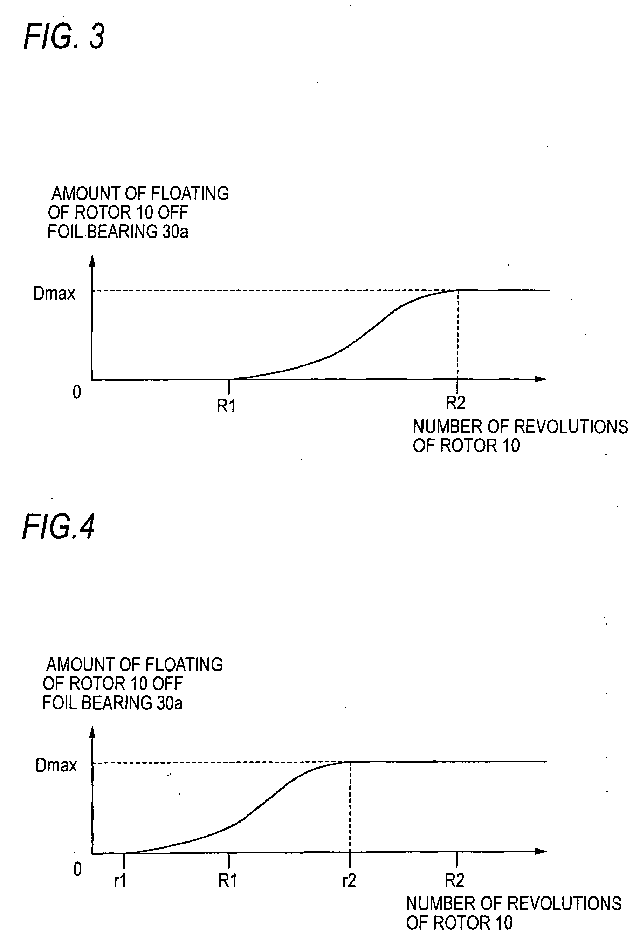

More specifically, in the case where the first electric current is supplied to the electromagnet 42a, the rotor 10 floats off the foil bearing 30a when the number of revolutions of the rotor 10 reaches R1 as shown in a graph of Fig. 3. Namely, R1 is the number of revolutions at which the rotor 10 floats off the foil bearing 30a when supplying the first electric current to the electromagnet 42a. On the other hand, in the case where the second electric current larger than the first electric current is supplied to the electromagnet 42a, the rotor 10 floats off the foil bearing 30a when the number of revolutions of the rotor 10 reaches r1 as shown in a graph of Fig. 4. The number of revolutions represented by r1 is smaller than the number of revolutions represented by R1. Therefore, when the number of revolutions of the rotor 10 is smaller than R1, the second electric current is supplied to the electromagnet 42a, so that the flange portion (magnetic member) 11a is attracted by a larger force than when the first electric current is supplied to the electromagnet 42a, and therefore the rotor 10 can be caused to float off the foil bearing 30a. As a result, in a condition in which a sufficient dynamic pressure to cause the rotor 10 to float off the foil bearing 30a is not obtained (as at the time of starting the rotation), the rotor 10 can be caused to float off the foil bearing 30a at the smaller number of revolutions (that is, r1 which is smaller than R1).

In the embodiment, the electromagnet 42a and the yoke member 41a are opposed to the flange portion (magnetic member) 11a in the axial direction A. As shown in Fig. 1, projections 14 to 17 are formed on the flange portion 11a, while projections 44 to 47 are formed on the yoke member 41a. When the rotor 10 is disposed in the floating condition relative to the foil bearing 30a, the projections 14 to 17 are opposed to the projections 44 to 47, respectively. These projections 14 to 17 and 44 to 47 are annular, and have their centers disposed on the rotation axis K of the rotor 10. Therefore, when electric current is supplied to the electromagnet 42a, the rotor 10 is attracted by a magnetic attraction force such that its rotation axis K is located at a position where the rotation axis K of the rotor 10 in its floating condition relative to the foil bearing 30a is located, and therefore the rotor 10 can be effectively caused to float off the foil bearing 30a.

In this embodiment, the plurality of projections 14 to 17, as well as the plurality of projections 44 to 47, are annular and concentric, and have their centers disposed on the rotation axis K of the rotor 10. Therefore, by a larger magnetic attraction force produced when electric current is supplied to the electromagnet 42a, the rotor 10 is attracted such that its rotation axis K is located at the position where the rotation axis K of the rotor 10 in its floating condition relative to the foil bearing 30a is located, and therefore the rotor 10 can be more effectively caused to float off the foil bearing 30a.

In this embodiment, the bearing apparatus 1 includes the rotation sensor 60 for detecting the number of revolutions of the rotor 10. Therefore, on the basis of the revolution number of the rotor 10 detected by the rotation sensor 60, the control portion 70 can accurately switch the operating electric current supplied to the electromagnet 42a between the first electric current and the second electric current.

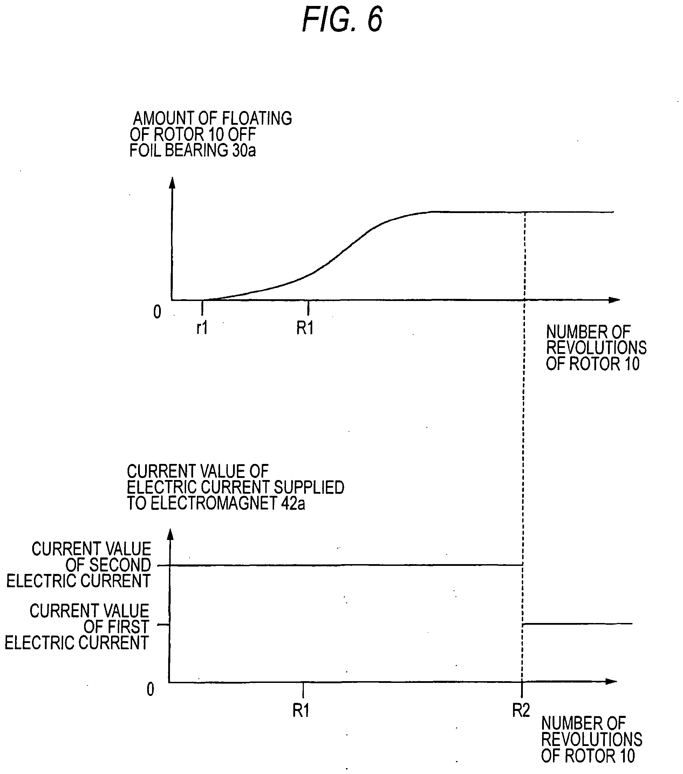

Furthermore, after the rotor 10 floats off the foil bearing 30a, the control portion 70 switches the operating electric current from the second electric current to the first electric current in a manner to maintain the floating condition of the rotor 10. Therefore, when the operating electric current is switched from the second electric current to the first electric current, the rotor 10 will not be brought into contact with the foil bearing 30a. In one example of this case (that is, the electric current is switched in a manner to maintain the floating condition of the rotor 10), in order to positively prevent the rotor 10 from being brought into contact with the foil bearing 30a when switching the electric current, preferably, the operating electric current is switched from the second electric current to the first electric current when the number of revolutions of the rotor 10 reaches R2 as shown in Fig. 6. This revolution number R2 is the number of revolutions (the minimum number of revolutions) at which the amount of floating of the rotor 10 off the foil bearing 30a becomes maximum (Dmax) when supplying the first electric current to the electromagnet 42a as shown in Fig. 3. At the revolution number higher than R2, the amount of floating of the rotor 10 off the foil bearing 30a obtained when supplying the first electric current to the electromagnet 42a is the same as the floating amount obtained when supplying the second electric current to the electromagnet 42a. Therefore, when the operating electric current is switched from the second electric current to the first electric current at the revolution number higher than R2, the amount of floating of the rotor 10 off the foil bearing 30a will not change in accordance with this current-switching operation.

In the bearing apparatus 1 of the above embodiment, the following advantages can be obtained.
(1) The control portion 70 controls such that the first electric current is supplied to the electromagnet 42a so as to cause the electromagnet 42a to attract the flange portion 11a so as to support the rotor 10 in the axial direction A. Then, when the number of revolutions of the rotor 10 is smaller than the number of revolutions (that is, R1) at which the rotor 10 is caused to float off the foil bearing 30a when supplying the first electric current to the electromagnet 42a, the second electric current larger than the first electric current is supplied to the electromagnet 42a under the control of the control portion 70. Therefore, even in a condition in which a sufficient dynamic pressure to cause the rotor 10 to float off the foil bearing 30a is not obtained, the rotor 10 can be caused to float off the foil bearing 30a at the smaller number of revolutions (that is, r1). Thus, with this simple construction in which merely the electric current supplied to the electromagnet 42a is controlled, wear of the foil bearing 30a can be suppressed. As a result, the life of the foil bearing 30a can be prolonged.
(2) The projections 14 to 17 are formed on the flange portion 11a, while the projections 44 to 47 are formed on the yoke member 41a, and when the rotor 10 is disposed in the floating condition relative to the foil bearing 30a, the projections 14 to 17 are opposed to the projections 44 to 47, respectively. These projections 14 to 17 and 44 to 47 are annular, and have their centers disposed on the rotation axis K of the rotor 10. Therefore, the rotor 10 can be effectively caused to float off the foil bearing 30a, and wear of the foil bearing 30a can be effectively suppressed.
(3) The plurality of projections 14 to 17, as well as the plurality of projections 44 to 47, are annular and concentric, and have their centers disposed on the rotation axis K of the rotor 10. Therefore, the rotor 10 can be more effectively caused to float off the foil bearing 30a, and wear of the foil bearing 30a can be more effectively suppressed.
(4) The bearing apparatus 1 includes the rotation sensor 60 for detecting the number of revolutions of the rotor 10. Therefore, the operating electric current supplied to the electromagnet 42a can be accurately switched between the first electric current and the second electric current, and the electric current supplied to the electromagnet 42a can be accurately controlled, and the wear of the foil bearing 30a can be precisely controlled.
(5) After the rotor 10 floats off the foil bearing 30a, the control portion 70 switches the operating electric current from the second electric current to the first electric current in a manner to maintain the floating condition of the rotor 10. Therefore, when the operating electric current is switched from the second electric current to the first electric current, the rotor 10 will not be brought into contact with the foil bearing 30a, and wear of the foil bearing 30a is prevented when the operating electric current is switched from the second electric current to the first electric current.

In the above embodiment, the centrifugal compressor is provided with the bearing apparatus 1, and therefore in this centrifugal compressor, the same advantages as described in the above Paragraphs (1) to (5) can be obtained. Incidentally, in any other suitable rotating machine (e.g. a blower, a turbine) than the centrifugal compressor, similar advantages can be obtained if it is provided with the bearing apparatus 1.

The present invention is not limited to the above embodiment, and various modifications can be made without departing from the subject matter of the invention as defined by the appended claims. For example, the following modifications can be made.

In the above embodiment, although the bearing apparatus 1 includes the rotation sensor 60 for detecting the number of revolutions of the rotor 10, it may not be provided with this rotation sensor 60, and instead may be provided with a radial direction displacement sensor for detecting the amount of floating of the rotor 10 off the foil bearing 30a. Whether the number of revolutions of the rotor 10 is smaller or larger than the number of revolutions at which the rotor 10 floats off the foil bearing 30a can be judged from the amount of floating of the rotor 10 (off the foil bearing 30a) detected by this radial direction displacement sensor. In this case, under the control of the control unit 70, the operating electric current supplied to the electromagnet 42a can be switched between the first electric current and the second electric current on the basis of the amount of floating of the rotor 10 (off the foil bearing 30a) detected by the radial direction displacement sensor.

## Claims

1. A bearing apparatus (1) comprising:
a rotating member (10) having a magnetic member (11a, 11b);
a foil bearing (30a, 30b) for supporting said rotating member (10) in a radial direction (R);
a magnetic bearing (40a, 40b) for supporting said rotating member (10) in an axial direction (A) by an electromagnet (42a, 42b); and
a controller (70) for controlling electric current supplied to said electromagnet (42a, 42b),
**characterized in that**
the electric current is supplied to said electromagnet (42a, 42b) to produce a magnetic attraction force which attracts said magnetic member (11a, 11b) so as to cause said rotating member (10) to float off said foil bearing (30a, 30b),
said controller (70) controls such that a first electric current is supplied to said electromagnet (42a, 42b) so as to cause said electromagnets (42a, 42b) to attract said magnetic member (11a, 11b) so as to support said rotating member (10) in the axial direction (A), and
said controller (70) also controls such that a second electric current larger than said first electric current is supplied to said electromagnet (42a, 42b) when a number of revolutions of said rotating member (10) is smaller than a number of revolutions at which said rotating member (10) floats off said foil bearing (30a, 30b) when said first electric current is supplied to said electromagnet (42a, 42b).

2. The bearing apparatus (1) according to claim 1, wherein said magnetic bearing (40a, 40b) includes a yoke member (41a, 41b) receiving said electromagnets (42a, 42b); and
said electromagnet (42a, 42b) and said yoke member (41a, 41b) are opposed to said magnetic member (11a, 11b) in the axial direction (A); and
first and second projections (14, 15, 16, 17; 44, 45, 46, 47) are formed respectively on said magnetic member (11a, 11b) and said yoke member (41a, 41b), and are opposed to each other when said rotating member (10) is disposed in a floating condition relative to said foil bearing (30a, 30b), and said projections (14, 15, 16, 17; 44, 45, 46, 47) are annular, and have centers thereof disposed on a rotation axis (K) of said rotating member (10).

3. The bearing apparatus (1) according to claim 2, wherein a plurality of said first projections (14, 15, 16, 17) are formed on said magnetic member (11a, 11b), and a plurality of said second projections (44, 45, 46, 47) are formed on said yoke member (41a, 41b), and said plurality of first projections (14, 15, 16, 17), as well as said plurality of second projections (44, 45, 46, 47), are annular and concentric, and have centers thereof disposed on the rotation axis (K) of said rotating member (10).

4. The bearing apparatus (1) according to any one of claims 1 to 3, wherein said apparatus (1) further comprises a detector (60) for detecting the number of revolutions of said rotating member (10).

5. The bearing apparatus according to any one of claims 1 to 4, wherein after said rotating member (10) floats off said foil bearing (30a, 30b), said controller (70) switches the operating electric current from said second electric current to said first electric current in a manner to maintain the floating condition of said rotating member (10).

6. A centrifugal compressor comprising the bearing apparatus (1) as defined in any one of claims 1 to 5.

## Patentansprüche

1. Lager-Vorrichtung (1) umfassend:
ein Rotationselement (10) mit einem Magnetelement (11a, 11b);
ein Folienlager (30a, 30b) zum Stützen des Rotationselements (10) in einer radialen Richtung (R);
ein Magnetlager (40a, 40b) zum Stützen des Rotationselements (10) in einer axialen Richtung (A) durch einen Elektromagneten (42a, 42b); und
einen Regler (70) zum Regeln eines elektrischen Stromes, der dem Elektromagneten (42a, 42b) bereitgestellt wird,
**dadurch gekennzeichnet, dass**
der elektrische Strom dem Elektromagneten (42a, 42b) bereitgestellt wird, um eine magnetische Anziehungskraft zu erzeugen, welche das Magnetelement (11a, 11b) anzieht, um ein Abheben des Rotationselements (10) von dem Folienlager (30a, 30b) zu bewirken,
wobei der Regler (70) derart regelt, dass ein erster elektrischer Strom dem Elektromagneten (42a, 42b) bereitgestellt wird, um zu bewirken, dass der Elektromagnet (42a, 42b) das Magnetelement (11a, 11b) anzieht, um das Rotationselement (10) in der axialen Richtung (A) zu stützen, und
wobei der Regler (70) derart regelt, dass ein zweiter elektrischer Strom größer als der erste elektrische Strom dem Elektromagneten (42a, 42b) bereitgestellt wird, wenn eine Drehzahl des Rotationselements (10) kleiner als eine Drehzahl ist, bei welcher das Rotationselement (10) von der Foliendichtung (30a, 30b) abhebt, wenn der erste elektrische Strom dem Elektromagneten (42a, 42b) bereitgestellt wird.

2. Lager-Vorrichtung (1) gemäß Anspruch 1, wobei das Magnetlager (40a, 40b) ein Gabelelement (41a, 41b) aufweist, das den Elektromagnet (42a, 42b) aufnimmt; und
wobei der Elektromagnet (42a, 42b) und das Gabelelement (41a, 41b) dem Magnetelement (11a, 11b) in der axialen Richtung (A) gegenüber liegen; und
wobei erste und zweite Vorsprünge (14, 15, 16, 17; 44, 45, 46, 47) jeweils an dem Magnetelement (11a, 11b) und dem Gabelelement (41a, 41b) ausgebildet sind, und einander gegenüber liegen, wenn das Rotationselement (10) in einem abgehobenen Zustand relativ zu dem Folienlager (30a, 30b) angeordnet ist, und wobei die Vorsprünge (14, 15, 16, 17; 44, 45, 46, 47) ringförmig sind, und die Mittelpunkte davon auf einer Rotationsachse (K) des Rotationselements (10) angeordnet sind.

3. Lager-Vorrichtung (1) gemäß Anspruch 2, wobei eine Vielzahl der ersten Vorsprünge (14, 15, 16, 17) an dem Magnetelement (11a, 11b) ausgebildet sind, und wobei eine Vielzahl der zweiten Vorsprünge (44, 45, 46, 47) an dem Gabelelement (41a, 41b) ausgebildet sind, und wobei die Vielzahl der ersten Vorsprünge (14, 15, 16, 17) sowie die Vielzahl der zweiten Vorsprünge (44, 45, 46, 47) ringförmig und konzentrisch sind, und die Mittelpunkte davon auf der Rotationsachse (K) des Rotationselements (10) angeordnet sind.

4. Lager-Vorrichtung (1) gemäß einem der Ansprüche 1 bis 3, wobei die Vorrichtung (1) ferner einen Detektor (60) zum Erfassen der Drehzahl des Rotationselements (10) umfasst.

5. Lager-Vorrichtung gemäß einem der Ansprüche 1 bis 4, wobei nach dem Abheben des Rotationselements (10) von dem Folienlager (30a, 30b) der Regler (70) den wirkenden elektrischen Strom von dem zweiten elektrischen Strom zu dem ersten elektrischen Strom auf eine Weise umschaltet, um den abgehobenen Zustand des Rotationselements (10) aufrechtzuerhalten.

6. Radialverdichter umfassend die Lager-Vorrichtung (1), wie in einem der Ansprüche 1 bis 5 definiert.

## Revendications

1. Appareil de palier (1) comprenant :
un élément rotatif (10) ayant un élément magnétique (11a, 11b) ;
un palier à feuilles (30a, 30b) pour supporter ledit élément rotatif (10) dans une direction radiale (R) ;
un palier magnétique (40a, 40b) pour supporter ledit élément rotatif (10) dans une direction axiale (A) par un électroaimant (42a, 42b) ; et
une unité de commande (70) pour commander un courant électrique fourni audit électroaimant (42a, 42b),
**caractérisé en ce que**
le courant électrique est fourni audit électroaimant (42a, 42b) pour produire une force d'attraction magnétique qui attire ledit élément magnétique (11a, 11b) de manière à amener ledit élément rotatif (10) à flotter par rapport audit palier à feuilles (30a, 30b),
ladite unité de commande (70) effectue une commande de sorte qu'un premier courant électrique soit fourni audit électroaimant (42a, 42b) de manière à amener ledit électroaimant (42a, 42b) à attirer ledit élément magnétique (11a, 11b) de manière à supporter ledit élément rotatif (10) dans la direction axiale (A), et
ladite unité de commande (70) effectue également une commande de sorte qu'un deuxième courant électrique plus grand que ledit premier courant électrique soit fourni audit électroaimant (42a, 42b) lorsqu'un nombre de tours dudit élément rotatif (10) est inférieur à un nombre de tours auquel ledit élément rotatif (10) flotte par rapport audit palier à feuilles (30a, 30b) lorsque ledit premier courant électrique est fourni audit électroaimant (42a, 42b).

2. Appareil de palier (1) selon la revendication 1, dans lequel ledit palier magnétique (40a, 40b) comporte un élément de culasse (41a, 41b) recevant ledit électroaimant (42a, 42b) ; et
ledit électroaimant (42a, 42b) et ledit élément de culasse (41a, 41b) sont opposés audit élément magnétique (11a, 11b) dans la direction axiale (A) ; et
des premières et deuxièmes saillies (14, 15, 16, 17 ; 44, 45, 46, 47) sont formées respectivement sur ledit élément magnétique (11a, 11b) et sur ledit élément de culasse (41a, 41b) et sont opposées les unes aux autres lorsque ledit élément rotatif (10) est disposé dans un état flottant par rapport audit palier à feuilles (30a, 30b), et lesdites saillies (14, 15, 16, 17 ; 44, 45, 46, 47) sont annulaires, et ont leurs centres disposés sur un axe de rotation (K) dudit élément rotatif (10).

3. Appareil de palier (1) selon la revendication 2, dans lequel une pluralité desdites premières saillies (14, 15, 16, 17) sont formées sur ledit élément magnétique (11a, 11b), et une pluralité desdites deuxièmes saillies (44, 45, 46, 47) sont formées sur ledit élément de culasse (41a, 41b), et ladite pluralité de premières saillies (14, 15, 16, 17), ainsi que ladite pluralité de deuxièmes saillies (44, 45, 46) 47), sont annulaires et concentriques, et ont leurs centres disposés sur l'axe de rotation (K) dudit élément rotatif (10).

4. Appareil de palier (1) selon l'une quelconque des revendications 1 à 3, dans lequel ledit appareil (1) comprend en outre un détecteur (60) pour détecter le nombre de tours dudit élément rotatif (10).

5. Appareil de palier selon l'une quelconque des revendications 1 à 4, dans lequel, après que ledit élément rotatif (10) flotte par rapport audit palier à feuilles (30a, 30b), ladite unité de commande (70) commute le courant électrique de fonctionnement dudit deuxième courant électrique audit premier courant électrique de manière à maintenir l'état flottant dudit élément rotatif (10).

6. Compresseur centrifuge comprenant l'appareil de palier (1) tel que défini dans l'une quelconque des revendications 1 à 5.
